# EUROPEAN PATENT SPECIFICATION

(11) **EP 2 739 114 B1**
(45) Date of publication and mention of the grant of the patent: **28.03.2018**
(21) Application number: 12825766.4
(22) Date of filing: 10.08.2012
(51) Int. Cl.: H04W 84/18, H04W 56/00

(54) **METHOD AND DEVICE FOR IMPLEMENTING SYNCHRONIZATION AND PERCEPTION BETWEEN USER EQUIPMENT**
VERFAHREN UND VORRICHTUNG ZUR DURCHFÜHRUNG EINER SYNCHRONISATION UND ERFASSUNG ZWISCHEN BENUTZERVORRICHTUNGEN
PROCÉDÉ ET DISPOSITIF DE MISE EN OEUVRE DE SYNCHRONISATION ET DE PERCEPTION ENTRE ÉQUIPEMENTS UTILISATEUR

(30) Priority: 23.08.2011 CN 201110243130
(43) Date of publication of application: 04.06.2014
(73) Proprietor: Huawei Technologies Co., Ltd., Longgang District Shenzhen, Guangdong 518129 (CN)
(72) Inventor: MA, Sha, Shenzhen Guangdong 518129 (CN); YU, Zheng, Shenzhen Guangdong 518129 (CN); WANG, Xuelong, Shenzhen Guangdong 518129 (CN)
(74) Representative: Pfenning, Meinig & Partner mbB
(86) International application number: PCT/CN2012/079909
(87) International publication number: WO 2013/026358

(56) References cited:
- EP-A1- 1 635 551
- EP-A1- 1 998 499
- CN-A- 101 163 329
- CN-A- 101 388 694
- US-B1- 6 574 266

## Description

### TECHNICAL FIELD

The present invention relates to the field of communications technologies, and in particular, to a method and a device for implementing synchronization and sense between user equipments.

### BACKGROUND

A radio communication system is a multiple access system, where a base station transmits data and/or control information to a user equipment in a downlink, and receives data and/or control information of the user equipment in an uplink. Similarly, the user equipment transmits data and/or control information to the base station in the uplink, and receives data and/or control information of the base station in the downlink. The base station and the user equipment may communicate in a Frequency Division Duplex (FDD) or Time Division Duplex (TDD) manner.

Before a user equipment and a base station establish a communication link, the user equipment firstly needs to keep downlink timing synchronization and uplink timing synchronization with the base station. Synchronization is very important for a communication system, and the user equipment can receive downlink data and transmit uplink data at a correct time point only when the user equipment keeps uplink and downlink synchronization with the base station. Usually, the user equipment determines downlink synchronization timing by detecting a synchronization channel, for example, a Primary Synchronization Channel (PSCH) or a Secondary Synchronization Channel (SSCH) in a Long Term Evolution (LTE) system. Further, the user equipment determines uplink transmission timing according to an uplink time adjusting request of the base station.

When two user equipments, namely, UE1 and UE2, need to communicate, for example, when UE1 sends data to UE2, a common practice is: UE1 transports the data to a base station firstly, and then the base station transports the data to UE2 over a network. In this scenario, both UE1 and UE2 only need to keep timing synchronization with the base station, and it is not necessary for UE1 and UE2 to have a synchronization timing relationship.

Currently, with the rapid development of information technologies, capacity of a communication system needs to be further improved to meet high-speed service requirements of user equipments. For example, user equipments that are close in distance can perform direct data transmission. This avoids that a transmitting user equipment transmits data to a base station firstly, and then the base station transmits the data to a receiving user equipment, thereby reducing resource overhead between the user equipments and the base station. In addition, different user pairs that are far in distance in one cell can share the same transmission resources, for example, time, a frequency, a code channel, and power resources, so as to improve spectrum utilization efficiency of the cell and increasing throughput of the cell. Further, original cellular system transmission between the user equipments and the base station can also be kept.

However, if one user equipment wants to directly communicate with another user equipment, the user equipment needs to have a capability of determining or discovering a potential target user equipment around that can directly communicate with the user equipment. Further, when the user equipments perform direct data transmission, because transmission timing of a user equipment that sends data is different from transmission timing of a base station, if a user equipment that receives data determines, according to the transmission timing of the base station, a time point for receiving the data transmitted from the user equipment that sends the data, a synchronization deviation will occur, and data cannot be extracted correctly, which causes a data decoding error and affects communication quality. Therefore, how one user equipment performs synchronization with and senses another user equipment is a key issue to implement direct communication between the user equipments. US6574266 B1 discloses a system and method for establishing ad hoc communication sessions between remote communication terminals is disclosed. A base station transmits a beacon signal including information about the identity and system clock of the base station. Remote terminals within range lock to the base station, synchronizing their system clocks with the base station's clock and setting their hop sequence and hop sequence phase based on information in the beacon signal. To establish an ad hoc communication session, a master terminal first establishes a link to the base station, which establishes a link to a desired slave terminal. The base terminal exchanges information between remote terminals that enables the master terminal to establish a direct communication session with a slave terminal. EP1998499A1 discloses wireless communication systems and in particular to peer-to-peer communications in wireless communication systems having central instances for medium resource allocation management. A probe message is sent from a first station to a second, remote station over a direct communication link, which makes use of network medium resources allocated by a central instance, which exercises control over shared communication medium resources of a wireless local area network and allocates medium resources to stations including at least the first station assigned to the central instance. A response message is received at the first station in response to the probe message. The response message includes information about link quality, which is determined at the second, remote station on the basis of physical layer measurements at the probe message. A direct communication link is established between the first station and the second, remote station. The direct communication link makes use of network medium resources allocated by the central instance. communication parameters of the direct communication link are selected in accordance with the link quality information. Data is then transmitted from the first station to the second, remote station through the direct communication link.

### SUMMARY

In view of the problem in the prior art, embodiments of the present invention provide a method and a device for implementing synchronization and sense between user equipments, to improve energy efficiency of user equipments and reduce resource overhead of a system, and ensure direct communication between user equipments.

Therefore, the embodiments of the present invention provide the following technical solutions:
A method for implementing synchronization and sense between user equipments includes:
   triggering, by a base station, a first user equipment to perform synchronization with another user equipment;
   receiving, by the base station, quality information, reported by the first user equipment, of a channel between the first user equipment and the another synchronized user equipment; and
   determining, by the base station, according to the quality information of the channel, a target user equipment that directly communicates with the first user equipment, and/or determining, according to the quality information of the channel, a radio resource which can be used by the first user equipment.

A method for implementing synchronization and sense between user equipments includes:
performing, by a first user equipment, synchronization with another user equipment according to triggering of a base station, and receiving a synchronization signal sent by the another user equipment;
estimating quality of a channel between the first user equipment and the another user equipment according to the synchronization signal; and
reporting information of the estimated quality of the channel between the first user equipment and the another user equipment to the base station.

A base station includes:
a triggering unit, configured to trigger a first user equipment to perform synchronization with another user equipment;
a receiving unit, configured to receive quality information, reported by the first user equipment triggered by the triggering unit, of a channel between the first user equipment and a synchronized user equipment; and
a control unit, configured to determine, according to the quality information of the channel received by the receiving unit, a target user equipment that directly communicates with the first user equipment, and/or determine, according to the quality information of the channel received by the receiving unit, a radio resource which can be used by the first user equipment.

A user equipment is includes:
a synchronizing unit, configured to perform synchronization with another user equipment according to triggering of a base station, and receive a synchronization signal sent by the another user equipment;
a processing unit, configured to estimate quality of a channel between the user equipment and the another user equipment according to the synchronization signal received by the synchronization unit; and
a sending unit, configured to report information of the quality, estimated by the processing unit, of the channel between the user equipment and the another user equipment to the base station.

In the method and device for implementing synchronization and sense between user equipments provided in the embodiments of the present invention, the base station triggers the first user equipment to perform synchronization with the another user equipment, and the first user equipment performs synchronization with the another user equipment according to the triggering of the base station, receives the synchronization signal sent by the another user equipment, estimates the quality of a channel between the first user equipment and the another user equipment according to the synchronization signal, and reports information of the estimated quality of the channel between the first user equipment and the another user equipment to the base station, to provide the base station with related reference. In this triggering manner, the first user equipment does not need to monitor the synchronization signal transmitted by the another user equipment all the time but instead monitors the synchronization signal of the another user equipment according to triggering of the base station, thereby effectively improving energy efficiency of the user equipment and reducing resource overhead of a system.

### BRIEF DESCRIPTION OF DRAWINGS

To describe the technical solutions in the embodiments of the present application or in the prior art more clearly, the following briefly introduces the accompanying drawings required for describing the embodiments. Apparently, the accompanying drawings in the following description show merely some embodiments of the present invention, and a person of ordinary skill in the art may still derive other drawings from these accompanying drawings.
FIG. 1 is a flowchart of a method for implementing synchronization and sense between user equipments according to an embodiment of the present invention;
FIG. 2 is a flowchart of a method for implementing synchronization and sense between user equipments according to an embodiment of the present invention;
FIG. 3 is a schematic structural diagram of a base station according to an embodiment of the present invention; and
FIG. 4 is a schematic structural diagram of a user equipment according to an embodiment of the present invention.

### DESCRIPTION OF EMBODIMENTS

In order to make the solutions of the present invention more comprehensible for a person skilled in the art, the embodiments of the present invention are further described hereinafter in detail with reference to the accompanying drawings and implementation manners.

When user equipments perform direct communication, in order to ensure correctness of direct communication between the user equipments, a user equipment that sends information needs to transmit a signal for synchronization, so that a user equipment that receives the information synchronizes, by detecting the signal, with the user equipment that sends the information. Considering that a user equipment does not always directly communicate with another user equipment, and from the point of improving energy efficiency of user equipments and reducing resource overhead of a system, one user equipment should not always transmit a signal for synchronization with another user equipment. Similarly, the user equipment should not always monitor a synchronization signal transmitted by another user equipment, either.

In addition, the user equipment also needs to have a capability of determining or discovering a potential target user equipment around that can directly communicate with the user equipment, to determine a proper target user equipment to perform direct communication between the user equipments. Similarly, from the point of improving energy efficiency of the user equipment and reducing resource overhead of the system, the user equipment should not always detect or sense a potential target user equipment around that can directly communicate with the user equipment.

Based on the above analysis and consideration, in a method and a device for implementing synchronization and sense between user equipments in the embodiments of the present invention, a base station triggers a first user equipment to perform synchronization with another user equipment, and the first user equipment performs synchronization with the another user equipment according to the triggering of the base station, receives a synchronization signal sent by the another user equipment, estimates quality of a channel between the first user equipment and the another user equipment according to the synchronization signal, and reports information of the estimated quality of the channel between the first user equipment and the another user equipment to the base station. In this way, the base station can determine, according to quality information of the channel, a target user equipment that directly communicates with the first user equipment, and/or determine, according to the quality information of the channel, a radio resource which can be used by the first user equipment, thereby implementing direct communication between different user equipments.

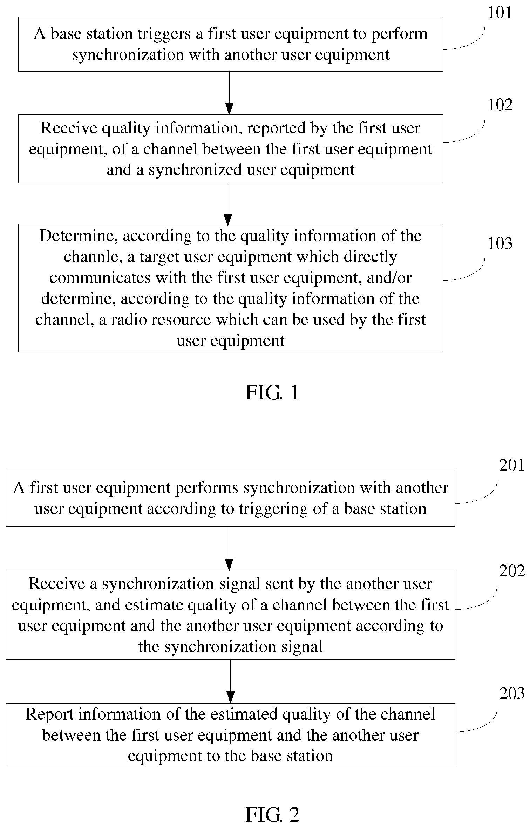

As shown in FIG. 1, FIG. 1 is a flowchart of a method for implementing synchronization and sense between user equipments according to an embodiment of the present invention. The flowchart shows a process on a base station side. The method includes the following steps:
Step 101: A base station triggers a first user equipment to perform synchronization with another user equipment.
Step 102: Receive quality information, reported by the first user equipment, of a channel between the first user equipment and a synchronized user equipment.
Step 103: Determine, according to the quality information of the channel, a target user equipment that directly communicates with the first user equipment, and/or determine, according to the quality information of the channel, a radio resource which can be used by the first user equipment.

It should be noted that, there may be one or more other user equipments.

In addition, in the embodiment of the present invention, before receiving quality information, reported by the first user equipment, of the channel between the first user equipment and a synchronized user equipment, the base station may further trigger the another user equipment to transmit a synchronization signal, so that the first user equipment performs synchronization with the another user equipment according to the synchronization signal. The operation that the base station triggers the another user equipment to transmit a synchronization signal may be performed before, simultaneously with, or after the operation of triggering the first user equipment to perform synchronization with another user equipment, which is not limited in the embodiment of the present invention.

Definitely, instead of being triggered by the base station, the another user equipment may also transmit the synchronization signal at preset intervals or continuously.

As shown in FIG. 2, FIG. 2 is another flowchart of a method for implementing synchronization and sense between user equipments according to an embodiment of the present invention. The flowchart shows a process on a user equipment side. The method includes the following steps:
Step 201: A first user equipment performs synchronization with another user equipment according to triggering of a base station.
Step 202: Receive a synchronization signal sent by the another user equipment, and estimate quality of a channel between the first user equipment and the another user equipment according to the synchronization signal.
Step 203: Report information of the estimated quality of the channel between the first user equipment and the another user equipment to the base station.

The method and device for implementing synchronization and sense between user equipments in the embodiments of the present invention are applicable to a radio communication system, especially a Long Term Evolution (Long Term Evolution, LTE)/Advanced Long Term Evolution (LTE-Advanced, LTE-A) radio communication system. The following description is made by using an example where the method is applicable to the LTE/LTE-A radio communication system.

Usually, a receiving side device performs synchronization with a transmitting side device based on a synchronization signal transmitted by the transmitting side device, and such a signal usually has good autocorrelation and cross-correlation properties. Good autocorrelation properties can restrain effects of multipath interference during signal detection, and good cross-correlation properties can restrain effects of multi-access interference during signal detection. The good autocorrelation and cross-correlation properties of synchronization signals can improve accuracy of signal detection.

In an LTE/LTE-A system, a user equipment transmits a sounding reference signal (Sounding Reference Signal, SRS) in an uplink, and a base station acquires channel quality of the uplink by detecting the SRS signal, so as to perform proper scheduling for the user equipment, including resource allocation and selection of a modulation and coding scheme and the like. The SRS signal has low autocorrelation and cross-correlation properties, which are similar to those of a synchronization signal transmitted by the base station. Therefore, when user equipments perform direct communication, the user equipment that receives data can detect the SRS of the user equipment that sends the data, to perform synchronization between the user equipments.

Therefore, in the embodiment of the present invention, the synchronization signal of the another user equipment may be an SRS signal, and definitely, may also be another newly defined signal for synchronization.

The first user equipment may function as a user equipment that receives the synchronization signal, and the another user equipment may function as a user equipment that transmits the synchronization signal, and may be a potential user equipment that directly communicates with the first user equipment. Definitely, the embodiment of the present invention is not limited thereto, and alternatively, only the first user equipment needs to perform synchronization and sense to obtain a user equipment that has corresponding channel quality with the first user equipment. For example, the first user equipment may sense, by measurement, a synchronization channel strength on a resource that is used by another user equipments in direct communication around, to determine whether the first user equipment can share a transmission resource of the another user equipment in direct communication. If the first user equipment obtains, by measurement, that the synchronization channel strength on a resource used by another user equipment in direct communication is weak, it indicates that the another user equipment in direct communication may be far away from the first user equipment, so that the first user equipment may share the transmission resource of the another user equipment in direct communication. Therefore, available transmission resources are increased without causing serious interference to the another user equipment in direct communication. For example, if the first user equipment obtains, by measurement, that the synchronization channel strength on a resource used by another user equipment in direct communication is strong, it indicates that the another user equipment in direct communication may be near the first user equipment. In this case, considering not causing serious interference to the another user equipment in direct communication, the first user equipment cannot share the transmission resource of the another user equipment in direct communication.

It should be noted that, uplink transmission timing of the user equipment that transmits the synchronization signal may equal uplink transmission timing between the user equipment and the base station.

In the embodiment of the present invention, the base station triggers the another user equipment to transmit the synchronization signal, for example, the above SRS signal, and triggers the first user equipment to detect the synchronization signal of the another user equipment. Specifically, the base station may send SRS signal configuration information of the another user equipment to the first user equipment, so that the first user equipment may determine the SRS signal of the another user equipment according to the SRS signal configuration information of the another user equipment, and detect the SRS signal of the another user equipment, so as to perform synchronization between the user equipments. Specifically, the first user equipment may generate an SRS signal according to the received SRS signal configuration information of the another user equipment, and perform correlation-matching between the generated SRS signal and the detected SRS signal which is transmitted by the another user equipment, so as to determine a time point at which the signal transmitted by the another user equipment arrives at the first user equipment, so as to finish the synchronization between the user equipments.

In a specific application, the base station may configure the user equipment to periodically transmit the SRS signal or aperiodically transmit the SRS signal, where both the periodic SRS signal and aperiodic SRS signal which are transmitted by the user equipment can be used as the signal for synchronization.

In the embodiment of the present invention, the base station may notify the first user equipment of the configuration information by carrying synchronization signal configuration information of the another user equipment in physical layer signaling, or Radio Resource Control (RRC) signaling, or Media Access Control (MAC) signaling. In this manner, the base station implicitly triggers, by sending the synchronization signal configuration information of the another user equipment to the first user equipment, the first user equipment to perform synchronization with the another user equipment.

For example, if the SRS signal is used as the synchronization signal, the base station may notify the first user equipment of SRS signal configuration information of the another user equipment, where the SRS signal configuration information includes one or more of the following information: SRS bandwidth configuration, SRS subframe configuration, configuration about SRS and ACK/NACK simultaneous transmission, SRS bandwidth, SRS hopping bandwidth, a frequency location, a duration, SRS configuration index, transmission comb configuration, cyclic shift configuration, SRS antenna port configuration, and aperiodic SRS related parameter configuration. When the SRS signal of the another user equipment is in a periodic transmission mode, the SRS signal configuration information may include no aperiodic SRS mode related parameters. When the SRS signal of the another user equipment is in an aperiodic transmission mode, the SRS signal configuration information may include no periodic SRS mode related parameters. When the first user equipment and the another user equipment are served by the same cell, the SRS signal configuration information may include no common SRS configuration information of the serving cell. When the first user equipment and the another user equipment are not served by the same cell, the SRS signal configuration information may include common SRS configuration information of the serving cell. After acquiring the SRS signal configuration information of the another user equipment, the first user equipment may determine a transmission time point of the SRS signal of the another user equipment, a frequency location, a transmission period, a hopping pattern, and a sequence format of the SRS signal, according to the acquired SRS signal configuration information of the another user equipment and based on a mechanism similar to that in an LTE system where a user equipment determines an SRS signal transmission time point, a frequency location, a transmission period, a hopping pattern, and a sequence format of the SRS signal according to SRS signal configuration information transmitted by a base station. For example, the first user equipment may determine a transmission time point of the SRS signal of the another user equipment according to the SRS subframe configuration in the SRS signal configuration information of the another user equipment.

For another example, the first user equipment may further perform synchronization with the another user equipment by using a newly defined synchronization signal. Specifically, the base station notifies the first user equipment of the synchronization signal configuration information of the another user equipment, for example, a transmission time point, a frequency location, and a sequence format of the synchronization signal, so that the first user equipment can determine the transmission time point of the synchronization signal, the frequency location, and the sequence format of the synchronization signal of the another user equipment.

In addition, the base station may further explicitly trigger the first user equipment to perform synchronization with the another user equipment. Specifically, the base station notifies the first user equipment of synchronization triggering indication information, where the synchronization triggering indication information is used to instruct the first user equipment to perform synchronization with the another user equipment. Specifically, the base station may notify the first user equipment of the synchronization triggering indication information by carrying the synchronization triggering indication information in physical layer signaling, or RRC signaling, or MAC signaling, or a response message sent by the base station to the first user equipment.

It should be noted that, the synchronization triggering indication information and the synchronization signal configuration information of the another user equipment may be carried in a same piece of physical layer signaling, or RRC signaling, or MAC signaling to be sent to the first user equipment, and may also be separately sent to the first user equipment by using different pieces of signaling.

When the base station carries the synchronization triggering indication information in physical layer signaling, the synchronization triggering indication information may be indicated by using a redundant bit, or a redundant state, or a newly-added bit in control information borne by a Physical Downlink Control Channel (PDCCH) which is sent by the base station to the first user equipment.

For example, when the first user equipment has no carriers for aggregation, or the maximum number of carriers that can be aggregated during carrier aggregation is less than 5, or a carrier aggregation function is not yet enabled at a higher layer, the base station may indicate, by using one or more redundant bits in a Carrier Indication Field (CIF), the triggering the first user equipment to perform synchronization with another user equipment. If a redundant bit state in the CIF field is 0, it indicates that the first user equipment does not perform synchronization with the another user equipment; and if the redundant bit state in the CIF field is 1, it indicates that the first user equipment performs synchronization with the another user equipment.

For another example, the base station may further add one or more new bits to the control information borne by the PDCCH, to indicate the triggering the first user equipment to perform synchronization with another user equipment. If the newly added redundant bit state is 0, it indicates that the first user equipment does not perform synchronization with the another user equipment; and if the newly added redundant bit state is 1, it indicates that the first user equipment performs synchronization with the another user equipment.

In addition, when the base station carries the synchronization triggering indication information in physical layer signaling, the base station may further carry the synchronization triggering indication information on a newly defined physical channel. For example, the base station may define a physical channel similar to a physical hybrid automatic repeat indicator channel to bear the synchronization triggering indication information, to instruct the first user equipment to perform synchronization with the another user equipment. For example, one bit is used to instruct the first user equipment to perform synchronization with the another user equipment, and the base station may encode the bit, and maps it to a data resource area. The first user equipment obtains the synchronization triggering indication information by detecting the new physical channel.

In the embodiment of the present invention, the base station may further trigger, by using a single piece of RRC signaling or MAC signaling, the first user equipment to perform synchronization with the another user equipment, or notify the first user equipment of the synchronization triggering indication information by carrying the synchronization triggering indication information in a redundant bit or a newly-added bit in existing RRC signaling or MAC signaling, so as to instruct the first user equipment to perform synchronization with the another user equipment.

For example, a redundant bit in a carrier activation/deactivation MAC control element may be used to trigger the first user equipment to perform synchronization with the another user equipment. The carrier activation/deactivation MAC control element is in a size of one byte, that is, consists of eight bits. It is assumed that the maximum number of carriers that can be supported by the first user equipment is five, and in this case, at most five bits are required for carrier activation and deactivation. Therefore, there are three redundant bits in the carrier activation/deactivation MAC control element, and these redundant bits may be used to trigger the first user equipment to perform synchronization with the another user equipment. For example one of these redundant bits is used to trigger the first user equipment to perform synchronization with the another user equipment. If the trigger bit state is 1 (or 0), it indicates triggering the first user equipment to perform synchronization with the another user equipment; and otherwise, if the trigger bit state is 0 (or 1), it indicates not triggering the first user equipment to perform synchronization with the another user equipment.

In addition, in the embodiment of the present invention, the base station may further notify the first user equipment of the synchronization triggering indication information by carrying the synchronization triggering indication information in a response message for the first user equipment, so as to instruct the first user equipment to perform synchronization with the another user equipment. For example, a new bit is added to a random access response message to instruct the first user equipment to perform synchronization with the another user equipment, or in a link establishment response message for the first user equipment, a new bit is used to instruct the first user equipment to perform synchronization with the another user equipment.

The user equipment performs synchronization with the another user equipment by detecting the RRC signaling, or MAC signaling, or explicit synchronization triggering indication information or implicit triggering indication in the response message that is sent by the base station to the user equipment.

In the embodiment of the present invention, the first user equipment may perform synchronization with the another user equipment according to triggering of the base station. Specifically, the first user equipment may receive, according to the synchronization signal configuration information of the another user equipment sent by the base station, the synchronization signal sent by the another user equipment, and may estimate quality of a channel between the first user equipment and the another user equipment according to the synchronization signal, and then report information of the estimated quality of the channel between the first user equipment and the another user equipment to the base station.

In addition, in an LTE system, a user equipment may determine a cell identity (cell ID) by detecting a primary synchronization signal and a secondary synchronization signal, where the cell identity equals an index of the detected secondary synchronization signal * 3 + an index of the primary synchronization signal. Therefore, in the embodiment of the present invention, by using a similar mechanism where a user equipment determines a cell identity by detecting a primary synchronization signal and a secondary synchronization signal, the first user equipment may detect the SRS signal or a newly defined synchronization signal of the another user equipment to determine identity information of the another user equipment. The identity information may be service type information (required or can be provided) of the user equipment, or resource configuration information of the user equipment. Therefore, the first user equipment may further determine the identity information of the another user equipment according to the synchronization signal of the another user equipment, and report the identity information to the base station.

Correspondingly, the base station may determine, according to quality information of the channel, a target user equipment that directly communicates with the first user equipment, and/or determine, according to the quality information of the channel, a radio resource which can be used by the first user equipment. If the estimated quality of the channel meets a condition of reliable communication, or the channel quality between the first user equipment and the another user equipments is better than signal quality between the first user equipment and the base station, the corresponding another user equipment can be used as a potential user equipment with which direct communication can be performed. In addition, the base station may further determine, according to the information of quality, reported by the first user equipment, of the channel between the first user equipment and the another user equipment, a resource allocation manner, a transmission resource size, and a modulation and coding scheme for data transmission between the first user equipment and the another user equipment.

It should be noted that, in a practical application, the first user equipment may further directly determine, by using a channel quality estimation result, the potential target user equipment which performs direct communication with the first user equipment. If the first user equipment can determine, by using the detected or sensed identity information or other information of the potential user equipment, that the potential user equipment is the target user equipment that performs direct communication, the first user equipment may not report the identity information of the potential target user equipment which performs direct communication with the first user equipment and/or the estimated quality of a channel between the first user equipment and the another user equipment to the base station. For example, the first user equipment acquires identity information of a potential target user equipment by detecting or sensing the SRS signal or the synchronization channel, and discovers that the potential target user equipment represented by the identity information is the target user equipment for the first user equipment to communicate with, and the quality of a channel between the first user equipment and the potential target user equipment meets a direct communication channel requirement, the first user equipment may use the potential target user equipment as the target user equipment to communicate with, and establish a direct communication link with the target user equipment.

It should be noted that, whether the target user equipment is determined by the base station or the first user equipment is not limited in the embodiment of the present invention.

It can be known from the above description that, in the method for implementing synchronization and sense between user equipments provided in the embodiment of the present invention, the base station triggers the first user equipment to perform synchronization with the another user equipment, and the first user equipment performs synchronization with the another user equipment according to the triggering of the base station, receives the synchronization signal sent by the another user equipment, estimates the quality of a channel between the first user equipment and the another user equipment according to the synchronization signal, and reports information of the estimated quality of the channel between the first user equipment and the another user equipment to the base station, to provide the base station with related reference. In this triggering manner, the first user equipment does not need to monitor the synchronization signal transmitted by the another user equipment all the time but instead monitors the synchronization signal of the another user equipment according to triggering of the base station, thereby effectively improving energy efficiency of the user equipment and reducing resource overhead of a system. Further, a user equipment on a transmitting side, that is, the another user equipment described above, may also be triggered by the base station to transmit the synchronization signal. As can be seen, the user equipment on the transmitting side does not need to transmit the synchronization signal all the time either but instead transmits the synchronization signal according to configuration of the base station. In this way, the base station can perform synchronization signal configuration for the another user equipment according to a requirement of establishing a possible direct communication link between the user equipments, and notify the first user equipment of corresponding configuration information, thereby further improving the energy efficiency of the user equipment and reducing the resource overhead of the system.

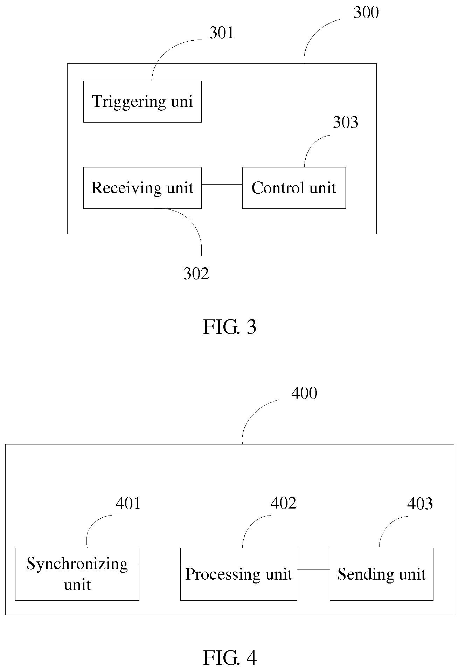

Correspondingly, an embodiment of the present invention further provides a base station. As shown in FIG. 3, FIG. 3 is a schematic structural diagram of the base station.

In this embodiment, the base station 300 includes:
a triggering unit 301, configured to trigger a first user equipment to perform synchronization with another user equipment;
a receiving unit 302, configured to receive quality information, which is triggered by the triggering unit 301 and reported by the first user equipment, of a channel between the first user equipment and a synchronized user equipment; and
a control unit 303, configured to determine, according to the quality information of the channel received by the receiving unit 302, a target user equipment that directly communicates with the first user equipment, and/or determine, according to the quality information of the channel received by the receiving unit 302, a radio resource which can be used by the first user equipment.

The synchronization signal of the another user equipment may be a sounding reference signal SRS, or a newly defined signal for synchronization. Configuration information of the two synchronization signals has been described in detail in the preceding embodiments, and details will not be described herein again.

In a practical application, the triggering unit 301 may notify the first user equipment of the synchronization signal configuration information of the another user equipment by using physical layer signaling, or RRC signaling, or MAC signaling, so as to implicitly trigger the first user equipment to perform synchronization with the another user equipment. In addition, the triggering unit 301 may further notify the first user equipment of synchronization triggering indication information, to explicitly instruct the first user equipment to perform synchronization with the another user equipment. Specifically, the triggering unit 301 may notify the first user equipment of the synchronization triggering indication information by carrying the synchronization triggering indication information in physical layer signaling, or RRC signaling, or MAC signaling, or a response message sent by the base station to the first user equipment. Definitely, in this case, the first user equipment may be notified of the configuration information and the synchronization triggering indication information by using one piece of signaling (that is, the two pieces of information are carried in the same piece of signaling) or by using different signaling. Reference may be made to the description of the method for implementing synchronization and sense between user equipments in the preceding embodiments of the present invention for a specific notification manner, and details will not be described herein again.

It should be noted that there may be one or more other user equipments.

The base station provided in the embodiment of the present invention triggers the first user equipment to perform synchronization with the another user equipment, so that the first user equipment does not need to monitor the synchronization signal transmitted by the another user equipment all the time but instead monitors the synchronization signal of the another user equipment according to triggering of the base station, thereby effectively improving energy efficiency of the user equipment and reducing resource overhead of a system.

Further, in another embodiment of the present invention, before the receiving unit 302 receives the quality information, reported by the first user equipment, of the channel between the first user equipment and the synchronized user equipment, the triggering unit 301 may further trigger the another user equipment to transmit a synchronization signal. In this way, the another user equipment does not need to transmit the synchronization signal all the time but instead transmits the synchronization signal according to configuration of the base station. The base station can perform synchronization signal configuration for the another user equipment according to a requirement of establishing a possible direct communication link between the user equipments, and notify the first user equipment of corresponding configuration information, thereby further improving the energy efficiency of the user equipment and reducing the resource overhead of the system.

It should be noted that, the operation that the triggering unit 301 triggers the another user equipment to transmit a synchronization signal may be performed before, simultaneously with, or after the operation of triggering the first user equipment to perform synchronization with another user equipment, which is not limited in the embodiment of the present invention.

Correspondingly, an embodiment of the present invention further provides a user equipment. As shown in FIG. 4, FIG. 4 is a schematic structural diagram of the user equipment.

In this embodiment, the user equipment 400 includes:
a synchronizing unit 401, configured to perform synchronization with another user equipment according to triggering of a base station, and receive a synchronization signal sent by the another user equipment;
a processing unit 402, configured to estimate quality of a channel between the user equipment and the another user equipment according to the synchronization signal received by the synchronizing unit 401; and
a sending unit 403, configured to report information of the quality, estimated by the processing unit 402, of the channel between the user equipment and the another user equipment to the base station.

The synchronizing unit 401 may be implemented in various manners. For example, the synchronizing unit 401 may receive synchronization signal configuration information, sent by the base station, of the another user equipment, and receive, according to the synchronization signal configuration information of the another user equipment, the synchronization signal sent by the another user equipment. For another example, the synchronizing unit 401 may receive synchronization triggering indication information and synchronization signal configuration information of the another user equipment, which are sent by the base station, and receive, according to the synchronization triggering indication information and the synchronization signal configuration information of the another user equipment, the synchronization signal sent by the another user equipment.

In the embodiment of the present invention, the synchronizing unit 401 may specifically receive the synchronization signal configuration information, sent by the base station by using physical layer signaling, or RRC signaling, or MAC signaling, of the another user equipment, determine, according to the synchronization signal configuration information, a transmission time point of the synchronization signal, a frequency location, and a sequence format of the synchronization signal of the another user equipment, and then receive and detect, according to the information, the synchronization signal sent by the another user equipment. Reference may be made to the description of the method for implementing synchronization and sense between user equipments in the preceding embodiments of the present invention for a specific process, and details will not be described herein again.

Definitely, in a specific application, the synchronization triggering unit 401 may further be implemented in another manner, which is not limited in the embodiment of the present invention.

The user equipment provided in the embodiment of the present invention does not need to monitor the synchronization signal transmitted by the another user equipment all the time but instead performs synchronization with the another user equipment according to triggering of the base station, thereby effectively improving energy efficiency of the user equipment and reducing resource overhead of a system.

The embodiments of the present invention are described in a progressive manner. Reference may be made for the same or similar parts of the embodiments, and each embodiment emphasizes differences from other embodiments. Particularly, because the device embodiments are basically similar to the method embodiments, their descriptions are simple, and reference may be made to the method embodiments for relevant parts. The system embodiment described above is merely exemplary. The units described as separate parts may or may not be physically separate, and the parts displayed as units may or may not be physical units, may be located in one position, or may be distributed in a plurality of network units. A part or all of the modules may be selected according to actual needs to achieve the objectives of the solutions of the embodiments. A person of ordinary skill in the art can understand and implement the embodiment without creative efforts.

The embodiments of the present invention are described in detail in the foregoing. Although the present invention is described by using specific examples in this specification, the descriptions of the embodiments are only intended to help understand the method and device of the present invention. Meanwhile, a person of ordinary skill in the art may make modifications to the specific implementation manners and application scopes according to the ideas of the present invention. To conclude, the content of the specification should not be construed as a limitation to the present invention.

## Claims

1. A method, implemented by a base station, for implementing synchronization and sense between user equipments, comprising:
triggering (101) a first user equipment to perform synchronization with another user equipment;
receiving (102) quality information, reported by the first user equipment, of a channel between the first user equipment and the another synchronized user equipment; and
determining (103), according to the quality information of the channel, a target user equipment that directly communicates with the first user equipment, and/or determining, according to the quality information of the channel, a radio resource which can be used by the first user equipment.

2. The method according to claim 1, wherein the triggering (101) a first user equipment to perform synchronization with another user equipment comprises:
notifying, by the base station, the first user equipment of synchronization signal configuration information of the another user equipment, so that the first user equipment performs synchronization with the another user equipment according to the synchronization signal configuration information of the another user equipment.

3. The method according to claim 2, wherein the triggering (101) a first user equipment to perform synchronization with another user equipment further comprises:
notifying, by the base station, the first user equipment of synchronization triggering indication information, to instruct the first user equipment to perform synchronization with the another user equipment;
or
instructing, by the base station by using a single piece of RRC signaling or MAC signaling, the first user equipment to perform synchronization with the another user equipment.

4. The method according to claim 3, wherein the notifying, by the base station, the first user equipment of synchronization triggering indication information comprises:
notifying, by the base station, the first user equipment of synchronization triggering indication information by carrying the synchronization triggering indication information in physical layer signaling, or RRC signaling, or MAC signaling, or a response message sent by the base station to the first user equipment;
wherein,
the carrying, by the base station, the synchronization triggering indication information in physical layer signaling comprises: carrying, by the base station, the synchronization triggering indication information in a redundant bit, or a redundant state, or a newly-added bit in control information borne by a physical downlink control channel PDCCH sent to the first user equipment; or carrying, by the base station, the synchronization triggering indication information on newly defined physical channel;
the carrying, by the base station, the synchronization triggering indication information in MAC signaling comprises: carrying, by the base station, the synchronization triggering indication information in a redundant bit of a carrier activation/deactivation MAC control element;
the carrying, by the base station, the synchronization triggering indication information in a response message sent by the base station to the first user equipment comprises: carrying, by the base station, the synchronization triggering indication information in a newly-added bit of a random access response message sent to the first user equipment; or carrying, by the base station, the synchronization triggering indication information in a newly-added bit of a link establishment response message sent to the first user equipment..

5. The method according to any one of claims 1 to 4, wherein before the receiving (102) quality information, reported by the first user equipment, of a channel between the first user equipment and the another synchronized user equipment, the method further comprises:
triggering, by the base station, the another user equipment to transmit a synchronization signal, so that the first user equipment performs synchronization with the another user equipment according to the synchronization signal.

6. The method according to claim 5, wherein the synchronization signal of the another user equipment is a sounding reference signal SRS, or a newly defined signal for synchronization; and wherein configuration information of the newly defined signal for synchronization comprises: a signal transmission time point, a frequency location, and a sequence format of the synchronization signal.

7. A method for implementing synchronization and sense between user equipments, comprising:
performing (201), by a first user equipment, synchronization with another user equipment according to triggering of a base station, and receiving (202) a synchronization signal sent by the another user equipment;
estimating (202) quality of a channel between the first user equipment and the another user equipment according to the synchronization signal; and
reporting (203) information of the estimated quality of the channel between the first user equipment and the another user equipment to the base station.

8. The method according to claim 7, wherein the performing (201), by a first user equipment, synchronization with another user equipment according to triggering of a base station comprises:
receiving, by the first user equipment, synchronization signal configuration information, sent by the base station, of the another user equipment; and
determining, according to the synchronization signal configuration information, a transmission time point of the synchronization signal, a frequency location, and a sequence format of the synchronization signal of the another user equipment.

9. The method according to claim 7, wherein the performing (201), by a first user equipment, synchronization with another user equipment according to triggering of a base station comprises:
receiving, by the first user equipment, synchronization triggering indication information and synchronization signal configuration information of the another user equipment, which are sent by the base station; and
determining, according to the synchronization triggering indication information and the synchronization signal configuration information, a transmission time point of the synchronization signal, a frequency location, and a sequence format of the synchronization signal of the another user equipment.

10. A base station (300), comprising:
a triggering unit (301), configured to trigger a first user equipment to perform synchronization with another user equipment;
a receiving unit (302), configured to receive quality information, reported by the first user equipment triggered by the triggering unit, of a channel between the first user equipment and the another synchronized user equipment; and
a control unit (303), configured to determine, according to the quality information of the channel received by the receiving unit, a target user equipment that directly communicates with the first user equipment, and/or determine, according to the quality information of the channel received by the receiving unit, a radio resource which can be used by the first user equipment.

11. The base station according to claim 10, wherein:
the triggering unit (301) is specifically configured to notify the first user equipment of synchronization signal configuration information of the another user equipment, so that the first user equipment performs synchronization with the another user equipment according to the synchronization signal configuration information of the another user equipment.

12. The base station according to claim 11, wherein:
the triggering unit (301) is further configured to:
notify the first user equipment of synchronization triggering indication information, to instruct the first user equipment to perform synchronization with the another user equipment;
or
instruct, by using a single piece of RRC signaling or MAC signaling, the first user equipment to perform synchronization with the another user equipment.

13. The base station according to claim 12, wherein:
the triggering unit (301) is specifically configured to notify the first user equipment of the synchronization triggering indication information by carrying the synchronization triggering indication information in physical layer signaling, or RRC signaling, or MAC signaling, or a response message sent by the base station to the first user equipment.

14. The base station according to any one of claims 10 to 13, wherein:
the triggering unit (301) is further configured to: before the receiving unit receives the quality information, reported by the first user equipment, of the channel between the first user equipment and the another synchronized user equipment, trigger the another user equipment to transmit a synchronization signal, so that the first user equipment performs synchronization with the another user equipment according to the synchronization signal.

15. A user equipment (400), comprising:
a synchronizing unit (401), configured to perform synchronization with another user equipment according to triggering of a base station, and receive a synchronization signal sent by the another user equipment;
a processing unit (402), configured to estimate quality of a channel between the user equipment and the another user equipment according to the synchronization signal received by the synchronization unit; and
a sending unit (403), configured to report information of the quality, estimated by the processing unit, of the channel between the user equipment and the another user equipment to the base station.

16. The user equipment according to claim 15, wherein:
the synchronizing unit (401) is specifically configured to receive synchronization signal configuration information, sent by the base station, of the another user equipment, and receive, according to the synchronization signal configuration information of the another user equipment, the synchronization signal sent by the another user equipment.

17. The user equipment according to claim15, wherein:
the synchronizing unit (401) is specifically configured to receive synchronization triggering indication information and synchronization signal configuration information of the another user equipment, which are sent by the base station, and receive, according to the synchronization triggering indication information and the synchronization signal configuration information of the another user equipment, the synchronization signal sent by the another user equipment.

## Patentansprüche

1. Verfahren, ausgeführt durch eine Basisstation, zur Durchführung von Synchronisicrung und Abfrage zwischen Endgeräten, umfassend:
Auslösen (101), dass ein erstes Endgerät eine Synchronisierung mit einem anderen Endgerät durchführt;
Empfangen (102) von Qualitätsinformationen, gemeldet vom ersten Endgerät, betreffend einen Kanal zwischen dem ersten Endgerät und dem anderen synchronisierten Endgerät; und
Bestimmen (103), entsprechend den Qualitätsinformationen des Kanals, eines Ziel-Endgeräts, welches direkt mit dem ersten Endgerät kommuniziert, und/oder Bestimmen, entsprechend den Qualitätsinformationen des Kanals, einer Funkressource, die vom ersten Endgerät benutzt werden kann.

2. Verfahren nach Anspruch 1, wobei das Auslösen (101), dass ein erstes Endgerät eine Synchronisierung mit einem anderen Endgerät durchführt, umfasst:
Benachrichtigen, durch die Basisstation, des ersten Endgeräts über Informationen betreffend die Synchronisierungssignalkonfiguration des anderen Endgeräts, sodass das erste Endgerät eine Synchronisierung mit dem anderen Endgerät entsprechend den Informationen betreffend die Synchronisierungssignalkonfiguration des anderen Endgeräts durchführt.

3. Verfahren nach Anspruch 2, wobei das Auslösen (101), dass ein erstes Endgerät eine Synchronisierung mit einem anderen Endgerät durchführt, umfasst:
Benachrichtigen, durch die Basisstation, des ersten Endgeräts über Informationen betreffend die Synchronisierungsauslöscmeldung, um das erste Endgerät anzuweisen, die Synchronisierung mit dem anderen Endgerät durchzuführen;
oder
Anweisen, durch die Basisstation unter Verwendung einer einzelnen RRC-Signalisierung oder MAC-Signalisierung, des ersten Endgeräts, dass es eine Synchronisierung mit dem anderen Endgerät durchführt.

4. Verfahren nach Anspruch 3, wobei das Benachrichtigen, durch die Basisstation, des ersten Endgeräts über Informationen betreffend die Synchronisierungsauslösemeldung umfasst:
Benachrichtigen, durch die Basisstation, des ersten Endgeräts über Informationen betreffend die Synchronisierungsauslösemeldung durch Übertragen der Informationen betreffend die Synchronisierungsauslösemeldung mittels einer Signalisierung auf physikalischer Ebene, oder RRC-Signalisierung, oder MAC-Signalisierung, oder einer Antwortmeldung, die durch die Basisstation an das erste Endgerät gesendet wird;
wobei
das Übertragen, durch die Basisstation, der Informationen betreffend die Synchronisierungsauslösemeldung mittels Signalisierung auf physikalischer Ebene umfasst: Übertragen, durch die Basisstation, der Informationen betreffend die Synchronisierungsauslösemeldung in einem redundanten Bit, oder einem redundanten Status, oder einem neu hinzugefügten Bit in Steuerinformationen, die durch einen an das erste Endgerät gesendeten physikalischen "Downlink"-Steuerkanal (PDCCH) getragen werden; oder Übertragen, durch die Basisstation, der Informationen betreffend die Synchronisierungsauslösemeldung auf einem neu definierten physikalischen Kanal;
das Übertragen, durch die Basisstation, der Informationen betreffend die Signalisierungsauslösemeldung mittels MAC-Signalisierung umfasst: Übertragen, durch die Basisstation, der Informationen betreffend die Synchronisierungsauslösemeldung in einem redundanten Bit eines Trägeraktivierungs/-deaktivierungs-MAC-Steuerelements;
das Übertragen, durch die Basisstation, der Informationen betreffend die Synchronisierungsauslösemeldung in einer Antwortmeldung, die von der Basisstation an das erste Endgerät gesendet wird, umfasst: Übertragen, durch die Basisstation, der Informationen betreffend die Synchronisierungsauslösemeldung in einem neu hinzugefügten Bit einer Direktzugriffsantwortmeldung, die an das erste Endgerät gesendet wird; oder Übertragen, durch die Basisstation, der Informationen betreffend die Synchronisierungsauslösemeldung in einem neu hinzugefügten Bit einer Verbindungsaufbauantwortmeldung, die an das erste Endgerät gesendet wird.

5. Verfahren nach einem der Ansprüche 1 bis 4, wobei das Verfahren vor dem Empfangen (102) von Qualitätsinformationen, gemeldet vom ersten Endgerät, hinsichtlich eines Kanals zwischen dem ersten Endgerät und dem anderen synchronisierten Endgerät ferner umfasst:
Auslösen, durch die Basisstation, dass das andere Endgerät ein Synchronisierungssignal übermittelt, derart, dass das erste Endgerät eine Synchronisierung mit dem anderen Endgerät entsprechend dem Synchronisierungssignal durchführt.

6. Verfahren nach Anspruch 5, wobei das Synchronisierungssignal des anderen Endgeräts ein Tonreferenzsignal (SRS) oder ein neu definiertes Signal zur Synchronisierung ist; und wobei Konfigurationsinformationen des neu definierten Signals zur Synchronisierung umfassen: einen Signalübertragungszeitpunkt, eine Frequenzlage und ein Sequenzformat des Synchronisierungssignals.

7. Verfahren zur Durchführung von Synchronisierung und Abfrage zwischen Endgeräten, umfassend:
Ausführen (201), durch ein erstes Endgerät, einer Synchronisierung mit einem anderen Endgerät entsprechend der Auslösung einer Basisstation, und Empfangen (202) eines Synchronisierungssignals, das durch das andere Endgerät gesendet wird;
Bewerten (202) der Qualität eines Kanals zwischen dem ersten Endgerät und dem anderen Endgerät entsprechend dem Synchronisierungssignal; und
Melden (203) von Informationen betreffend die bewertete Qualität des Kanals zwischen dem ersten Endgerät und dem anderen Endgerät an die Basisstation.

8. Verfahren nach Anspruch 7, wobei das Ausführen (201), durch ein erstes Endgerät, einer Synchronisierung mit einem anderen Endgerät entsprechend der Auslösung einer Basisstation umfasst:
Empfangen, durch das erste Endgerät, von Informationen betreffend die durch die Basisstation gesendete Synchronisierungssignalkonfiguration des anderen Endgeräts; und
Bestimmen, entsprechend den Informationen betreffend die Synchronisierungssignalkonfiguration, eines Übertragungszeitpunkts des Synchronisierungssignals, einer Frequenzlage und eines Sequenzformats des Synchronisierungssignals des anderen Endgeräts.

9. Verfahren nach Anspruch 7, wobei das Ausführen (201), durch ein erstes Endgerät, einer Synchronisierung mit einem anderen Endgerät entsprechend der Auslösung einer Basisstation umfasst:
Empfangen, durch das erste Endgerät, von Informationen betreffend die Synchronisierungsauslösemeldung des anderen Endgeräts, die durch die Basisstation gesendet werden; und
Bestimmen, entsprechend den Informationen betreffend die Synchronisierungsauslösemeldung und den Informationen betreffend die Synchronisierungssignalkonfiguration, eines Übertragungszeitpunkts des Synchronisierungssignals, einer Frequenzlage und eines Sequenzformats des Synchronisierungssignals des andere Endgeräts.

10. Basisstation (300), umfassend:
eine Auslöseeinheit (301), die derart gestaltet ist, dass sie auslöst, dass ein erstes Endgerät eine Synchronisierung mit einem anderen Endgerät durchführt;
eine Empfangseinheit (302), die derart gestaltet ist, dass sie Qualitätsinformationen empfängt, die vom ersten Endgerät gemeldet werden, ausgelöst durch die Auslöseeinheit, hinsichtlich eines Kanals zwischen dem ersten Endgerät und dem anderen synchronisierten Endgerät; und
eine Steuereinheit (303), die derart gestaltet ist, dass sie entsprechend den durch die Empfangseinheit empfangenen Qualitätsinformationen des Kanals, ein Ziel-Endgerät bestimmt, welches direkt mit dem ersten Endgerät kommuniziert, und/oder entsprechend den durch die Empfangseinheit empfangenen Qualitätsinformationen des Kanals eine Funkressource bestimmt, die vom ersten Endgerät benutzt werden kann.

11. Basisstation nach Anspruch 10, wobei:
die Auslöseeinheit (301) speziell dafür gestaltet ist, dass sie das erste Endgerät über Informationen betreffend die Synchronisierungssignalkonfiguration des anderen Endgeräts benachrichtigt, sodass das erste Endgerät eine Synchronisierung mit dem anderen Endgerät entsprechend den Informationen betreffend die Synchronisierungssignalkonfiguration des anderen Endgeräts durchführt.

12. Basisstation nach Anspruch 11, wobei:
die Auslöseeinheit (301) ferner derart gestaltet ist, dass sie:
das erste Endgerät über Informationen betreffend die Synchronisierungsauslösemeldung benachrichtigt, um das erste Endgerät anzuweisen, die Synchronisierung mit dem anderen Endgerät durchzuführen;
oder
das erste Endgerät unter Verwendung einer einzelnen RRC-Signalisierung oder MAC-Signalisierung anweist, eine Synchronisierung mit dem anderen Endgerät durchzuführt.

13. Basisstation nach Anspruch 12, wobei:
die Auslöseeinheit (301) speziell dafür gestaltet ist, das erste Endgerät über Informationen betreffend die Synchronisierungsauslösemeldung zu benachrichtigen durch Übertragen der Informationen betreffend die Synchronisierungsauslösemeldung mittels einer Signalisierung auf physikalischer Ebene, oder RRC-Signalisierung, oder MAC-Signalisierung, oder einer Antwortmeldung, die von der Basisstation an das erste Endgerät gesendet wird.

14. Basisstation nach einem der Ansprüche 10 bis 13, wobei:
die Auslöseeinheit (301) ferner derart gestaltet ist, dass sie: bevor die Empfangseinheit die vom ersten Endgerät gemeldeten Qualitätsinformationen betreffend den Kanal zwischen dem ersten Endgerät und dem anderen synchronisierten Endgerät empfängt, auslöst, dass das andere Endgerät ein Synchronisierungssignal überträgt, derart, dass das erste Endgerät eine Synchronisierung mit dem anderen Endgerät gemäß dem Synchronisierungssignal durchführt.

15. Endgerät (400), umfassend:
eine Synchronisierungseinheit (401), die derart gestaltet ist, dass sie eine Synchronisierung mit einem anderen Endgerät entsprechend der Auslösung einer Basisstation durchführt und ein durch das andere Endgerät gesendetes Synchronisierungssignal empfängt;
eine Verarbeitungseinheit (402), die derart gestaltet ist, dass sie die Qualität eines Kanals zwischen dem Endgerät und dem anderen Endgerät entsprechend dem durch die Synchronisierungseinheit empfangenen Synchronisierungssignal bewertet; und
eine Sendeeinheit (403), die derart gestaltet ist, dass durch die Verarbeitungseinheit bewertete Qualitätsinformationen hinsichtlich des Kanals zwischen dem Endgerät und dem anderen Endgerät an die Basisstation meldet.

16. Endgerät nach Anspruch 15, wobei:
die Synchronisierungseinheit (401) speziell dafür gestaltet ist, dass sie Informationen betreffend die Synchronisierungssignalkonfiguration, gesendet durch die Basisstation, des anderen Endgeräts empfängt, und dass sie entsprechend den Informationen betreffend die Synchronisierungssignalkonfiguration des anderen Endgeräts das durch das andere Endgerät gesendete Synchronisierungssignal empfängt.

17. Endgerät nach Anspruch 15, wobei:
die Synchronisierungseinheit (401) speziell dafür gestaltet ist, dass sie Informationen betreffend die Synchronisierungsauslösemeldung und Informationen betreffend die Synchronisierungssignalkonfiguration des anderen Endgeräts, welche durch die Basisstation gesendet werden, empfängt, und dass sie entsprechend den Informationen betreffend die Synchronisierungsauslösemeldung und den Informationen betreffend die Synchronisierungssignalkonfiguration des anderen Endgeräts das durch das andere Endgerät gesendete Synchronisierungssignal empfängt.

## Revendications

1. Procédé, mis en oeuvre par une station de base, de mise en oeuvre d'une synchronisation et d'une détection entre des équipements utilisateur, le procédé comprenant les étapes suivantes :
déclenchement (101) d'un premier équipement utilisateur pour qu'il réalise une synchronisation avec un autre équipement utilisateur ;
réception (102) d'informations de qualité, signalées par le premier équipement utilisateur, concernant un canal entre le premier équipement utilisateur et l'autre équipement utilisateur synchronisé ; et
détermination (103), selon les informations de qualité concernant le canal, d'un équipement utilisateur cible qui communique directement avec le premier équipement utilisateur, et/ou détermination, selon les informations de qualité concernant le canal, d'une ressource radio susceptible d'être utilisée par le premier équipement utilisateur.

2. Procédé selon la revendication 1, dans lequel l'étape de déclenchement (101) d'un premier équipement utilisateur pour qu'il réalise une synchronisation avec un autre équipement utilisateur comprend l'étape suivante :
notification, par la station de base, au premier équipement utilisateur d'informations de configuration de signal de synchronisation concernant l'autre équipement utilisateur, de sorte que le premier équipement utilisateur réalise une synchronisation avec l'autre équipement utilisateur selon les informations de configuration de signal de synchronisation concernant l'autre équipement utilisateur.

3. Procédé selon la revendication 2, dans lequel l'étape de déclenchement (101) d'un premier équipement utilisateur pour qu'il réalise une synchronisation avec un autre équipement utilisateur comprend en outre l'étape suivante :
notification, par la station de base, au premier équipement utilisateur d'informations d'indication de déclenchement de synchronisation, afin de donner pour instruction au premier équipement utilisateur de réaliser une synchronisation avec l'autre équipement utilisateur ;
ou
instruction donnée, par la station de base au moyen d'un unique élément de signalisation RRC ou de signalisation MAC, au premier équipement utilisateur de réaliser une synchronisation avec l'autre équipement utilisateur.

4. Procédé selon la revendication 3, dans lequel l'étape de notification, par la station de base, au premier équipement utilisateur d'informations d'indication de déclenchement de synchronisation comprend l'étape suivante :
notification, par la station de base, au premier équipement utilisateur d'informations d'indication de déclenchement de synchronisation par transport des informations d'indication de déclenchement de synchronisation dans une signalisation de couche physique ou une signalisation RRC ou une signalisation MAC ou un message de réponse envoyé par la station de base au premier équipement utilisateur ;
le transport, par la station de base, des informations d'indication de déclenchement de synchronisation dans une signalisation de couche physique comprenant : le transport, par la station de base, des informations d'indication de déclenchement de synchronisation dans un bit redondant ou un état redondant ou un bit nouvellement ajouté dans des informations de commande véhiculées par un canal de commande physique descendant, dit PDCCH, envoyé au premier équipement utilisateur ; ou le transport, par la station de base, des informations d'indication de déclenchement de synchronisation sur un canal physique nouvellement défini ;
le transport, par la station de base, des informations d'indication de déclenchement de synchronisation dans une signalisation MAC comprenant : le transport, par la station de base, des informations d'indication de déclenchement de synchronisation dans un bit redondant d'un élément de commande MAC d'activation/de désactivation de porteuses ;
le transport, par la station de base, des informations d'indication de déclenchement de synchronisation dans un message de réponse envoyé par la station de base au premier équipement utilisateur comprenant : le transport, par la station de base, des informations d'indication de déclenchement de synchronisation dans un bit nouvellement ajouté d'un message de réponse d'accès aléatoire envoyé au premier équipement utilisateur ; ou le transport, par la station de base, des informations d'indication de déclenchement de synchronisation dans un bit nouvellement ajouté d'un message de réponse d'établissement de liaison envoyé au premier équipement utilisateur.

5. Procédé selon l'une quelconque des revendications 1 à 4, le procécé comprenant en outre, avant l'étape de réception (102) d'informations de qualité, signalées par le premier équipement utilisateur, concernant un canal entre le premier équipement utilisateur et l'autre équipement utilisateur synchronisé, l'étape suivante :
déclenchement, par la station de base, de l'autre équipement utilisateur pour qu'il émette un signal de synchronisation, de sorte que le premier équipement utilisateur réalise une synchronisation avec l'autre équipement utilisateur selon le signal de synchronisation.

6. Procédé selon la revendication 5, dans lequel le signal de synchronisation de l'autre équipement utilisateur est un signal de référence de sondage, dit SRS, ou un signal nouvellement défini pour une synchronisation ; et dans lequel des informations de configuration du signal nouvellement défini pour une synchronisation comprennent :
un instant d'émission de signal, un emplacement de fréquence et un format de séquence du signal de synchronisation.

7. Procédé de mise en oeuvre d'une synchronisation et d'une détection entre des équipements utilisateur, le procédé comprenant les étapes suivantes :
réalisation (201), par un premier équipement utilisateur, d'une synchronisation avec un autre équipement utilisateur selon un déclenchement d'une station de base, et réception (202) d'un signal de synchronisation envoyé par l'autre équipement utilisateur ;
estimation (202) d'une qualité d'un canal entre le premier équipement utilisateur et l'autre équipement utilisateur selon le signal de synchronisation ; et
signalement (203), à la station de base, d'informations concernant la qualité estimée du canal entre le premier équipement utilisateur et l'autre équipement utilisateur.

8. Procédé selon la revendication 7, dans lequel l'étape de réalisation (201), par un premier équipement utilisateur, d'une synchronisation avec un autre équipement utilisateur selon un déclenchement d'une station de base comprend les étapes suivantes :
réception, par le premier équipement utilisateur, d'informations de configuration de signal de synchronisation, envoyées par la station de base, concernant l'autre équipement utilisateur ; et
détermination, selon les informations de configuration de signal de synchronisation, d'un instant d'émission du signal de synchronisation, d'un emplacement de fréquence et d'un format de séquence du signal de synchronisation de l'autre équipement utilisateur.

9. Procédé selon la revendication 7, dans lequel l'étape de réalisation (201), par un premier équipement utilisateur, d'une synchronisation avec un autre équipement utilisateur selon un déclenchement d'une station de base comprend les étapes suivantes :
réception, par le premier équipement utilisateur, d'informations d'indication de déclenchement de synchronisation et d'informations de configuration de signal de synchronisation concernant l'autre équipement utilisateur, qui sont envoyées par la station de base ; et
détermination, selon les informations d'indication de déclenchement de synchronisation et les informations de configuration de signal de synchronisation, d'un instant d'émission du signal de synchronisation, d'un emplacement de fréquence et d'un format de séquence du signal de synchronisation de l'autre équipement utilisateur.

10. Station de base (300), comprenant :
une unité de déclenchement (301), configurée pour déclencher un premier équipement utilisateur pour qu'il réalise une synchronisation avec un autre équipement utilisateur ;
une unité de réception (302), configurée pour recevoir des informations de qualité, signalées par le premier équipement utilisateur déclenché par l'unité de déclenchement, concernant un canal entre le premier équipement utilisateur et l'autre équipement utilisateur synchronisé ; et
une unité de commande (303), configurée pour déterminer, selon les informations de qualité concernant le canal reçues par l'unité de réception, un équipement utilisateur cible qui communique directement avec le premier équipement utilisateur, et/ou déterminer, selon les informations de qualité concernant le canal reçues par l'unité de réception, une ressource radio susceptible d'être utilisée par le premier équipement utilisateur.

11. Station de base selon la revendication 10, dans laquelle :
l'unité de déclenchement (301) est plus particulièrement configurée pour notifier au premier équipement utilisateur des informations de configuration de signal de synchronisation concernant l'autre équipement utilisateur, de sorte que le premier équipement utilisateur réalise une synchronisation avec l'autre équipement utilisateur selon les informations de configuration de signal de synchronisation concernant l'autre équipement utilisateur.

12. Station de base selon la revendication 11, dans laquelle :
l'unité de déclenchement (301) est configurée en outre pour :
notifier au premier équipement utilisateur des informations d'indication de déclenchement de synchronisation, afin de donner pour instruction au premier équipement utilisateur de réaliser une synchronisation avec l'autre équipement utilisateur ;
ou
donner pour instruction, au moyen d'un unique élément de signalisation RRC ou de signalisation MAC, au premier équipement utilisateur de réaliser une synchronisation avec l'autre équipement utilisateur.

13. Station de base selon la revendication 12, dans laquelle :
l'unité de déclenchement (301) est plus particulièrement configurée pour notifier au premier équipement utilisateur les informations d'indication de déclenchement de synchronisation par transport des informations d'indication de déclenchement de synchronisation dans une signalisation de couche physique ou une signalisation RRC ou une signalisation MAC ou un message de réponse envoyé par la station de base au premier équipement utilisateur.

14. Station de base selon l'une quelconque des revendications 10 à 13, dans laquelle :
l'unité de déclenchement (301) est configurée en outre pour : avant que l'unité de réception ne reçoive les informations de qualité, signalées par le premier équipement utilisateur, concernant le canal entre le premier équipement utilisateur et l'autre équipement utilisateur synchronisé, déclencher l'autre équipement utilisateur pour qu'il émette un signal de synchronisation, de sorte que le premier équipement utilisateur réalise une synchronisation avec l'autre équipement utilisateur selon le signal de synchronisation.

15. Équipement utilisateur (400), comprenant :
une unité de synchronisation (401), configurée pour réaliser une synchronisation avec un autre équipement utilisateur selon un déclenchement d'une station de base, et
recevoir un signal de synchronisation envoyé par l'autre équipement utilisateur ;
une unité de traitement (402), configurée pour estimer une qualité d'un canal entre l'équipement utilisateur et l'autre équipement utilisateur selon le signal de synchronisation reçu par l'unité de synchronisation ; et
une unité d'envoi (403), configurée pour signaler, à la station de base, des informations concernant la qualité, estimée par l'unité de traitement, du canal entre l'équipement utilisateur et l'autre équipement utilisateur.

16. Équipement utilisateur selon la revendication 15, dans lequel :
l'unité de synchronisation (401) est plus particulièrement configurée pour recevoir des informations de configuration de signal de synchronisation, envoyées par la station de base, concernant l'autre équipement utilisateur, et recevoir, selon les informations de configuration de signal de synchronisation concernant l'autre équipement utilisateur, le signal de synchronisation envoyé par l'autre équipement utilisateur.

17. Équipement utilisateur selon la revendication 15, dans lequel :
l'unité de synchronisation (401) est plus particulièrement configurée pour recevoir des informations d'indication de déclenchement de synchronisation et des informations de configuration de signal de synchronisation concernant l'autre équipement utilisateur, qui sont envoyées par la station de base, et recevoir, selon les informations d'indication de déclenchement de synchronisation et les informations de configuration de signal de synchronisation de l'autre équipement utilisateur, le signal de synchronisation. envoyé par l'autre équipement utilisateur.
